# EUROPEAN PATENT APPLICATION

(11) **EP 2 636 857 A1**
(43) Date of publication of application: **11.09.2013**
(21) Application number: 12158384.3
(22) Date of filing: 07.03.2012
(51) Int. Cl.: F01D 25/28, G01B 21/00

(54) **A system for testing vanes of a turbomachine**

(71) Applicant: Siemens Aktiengesellschaft, 80333 München (DE)
(72) Inventor: Clossen-von Lanken Schulz, Michael, 47661 Issum (DE); Neubauer, Werner, 81739 München (DE)

(57) **Abstract**

A system (30, 80) for testing a vane (12) of a turbomachine is presented. The system (30, 80) includes a plurality of arms (38) for holding onto the vane (12), means for traversing (39) the vane (12) in a radial direction (46) with respect to an axis of rotation of a rotor of the turbomachine, and a measurement probe (34) for calculating the dimensions of the vane (12) based upon an extent of the arms (38) and a distance traversed by the traversing means (39).

## Description

The present invention relates to a system for testing airfoils of a turbomachine, and more particularly to a mobile system for testing vanes of a turbomachine.

In modern day turbomachines various components of the turbomachine operate at very high temperatures. These components include the blade or vane component, which are in shape of an airfoil. In the present application, only "vane", but the specifications can be transferred to a blade. The high temperatures during operation of the turbomachine may damage the vane component; alternatively the vane component may also be damaged due to low cycle fatigue or creep.

Currently, the blade or vane component is checked for any damage or irregularities by a test probe which is generally fastened to a long rod, which may be moved with the help of a foldable arm or a portable robot system over the blade or vane component. However, the currently available solution as mentioned hereinabove does not provide accurate positioning with respect to the turbomachine and therefore positional errors may arise owing to the flexibilities/resilience in the system.

Furthermore, the currently available testing systems are quite large and hence have to be installed on the site, which increases the cost.

It is therefore an object of the present invention to provide a portable testing system which can be easily transported and provides an accurate measurement of the structure of the blade or vane component.

The object is achieved by providing a system for testing a vane of a turbomachine according to claim 1.

According to the invention an exemplary system for testing a vane of a turbomachine is provided. The system includes a plurality of arms for holding onto the vane. Additionally the system includes means for traversing the vane in a radial direction with respect to an axis of rotation of the rotor of the turbomachine and a measurement probe for calculating the dimensions of the vane based upon the extent of the arms and the distance traversed by the traversing means. By having the above mentioned features a portable system for testing the vane or blade is obtained which is easily fastened to the vane and can determine any irregularities or defects in the blade or vane component of the turbomachine.

In one embodiment, the arms holding onto the vane are in the form of segments including a plurality of rods and spacers, wherein the arms are configured to allow a degree of freedom at an end holding onto the vane. By having a degree of freedom the system is adaptable to hold onto different blade or vane components of varying sizes.

In one embodiment, the traversing means include a plurality of rollers which would enable the system to traverse the entire length of the vane in a radial direction by rolling on the vane surface.

In another embodiment, the system includes a detecting probe for detecting a location of a second vane with respect to the first vane in the turbine disk.

In one embodiment, the system includes a second set of arms coupled to the detecting probe for holding onto the second vane and thereafter testing the second vane by switching to the second vane from the first vane.

In one embodiment, the system propagates from the one vane to the next vane in the turbine disk in a step mechanism which enables continuous testing of the vanes without the need of manually attaching the system to each turbine vane for testing.

In another embodiment, the system propagates from the first vane to the second vane in the turbine disk, this prevents the system from missing out the testing of a particular vane since the testing and propagation is systematic.

In one embodiment, the traversing means is configured to further traverse along a transverse axis which is perpendicular to the radial direction of the vane. The transverse axis is in the direction of a leading edge to a trailing edge of the vane. By traversing in along the transverse axis the extent of the vane from the leading edge to the trailing edge is also covered.

In one embodiment, the detection probe includes a sensor for accurately measuring the location of the second vane with respect to the first vane.

In another embodiment, the traversing means include extendable attachments for allowing the extension along the transverse axis since the dimensions of the vane from the leading edge to trailing edge vary while moving in the radial direction that is from the base to the tip of the vane.

The above-mentioned and other features of the invention will now be addressed with reference to the accompanying drawings of the present invention. The illustrated embodiments are intended to illustrate, but not limit the invention. The drawings contain the following figures, in which like numbers refer to like parts, throughout the description and drawings.
FIG 1 is a schematic diagram depicting a turbine disk with airfoils,
FIG 2 is a schematic diagram of an exemplary system for testing a vane of a turbomachine,
FIG 3 depicts a portion of the vane in a radial direction with traversing means of the exemplary system of FIG 2.

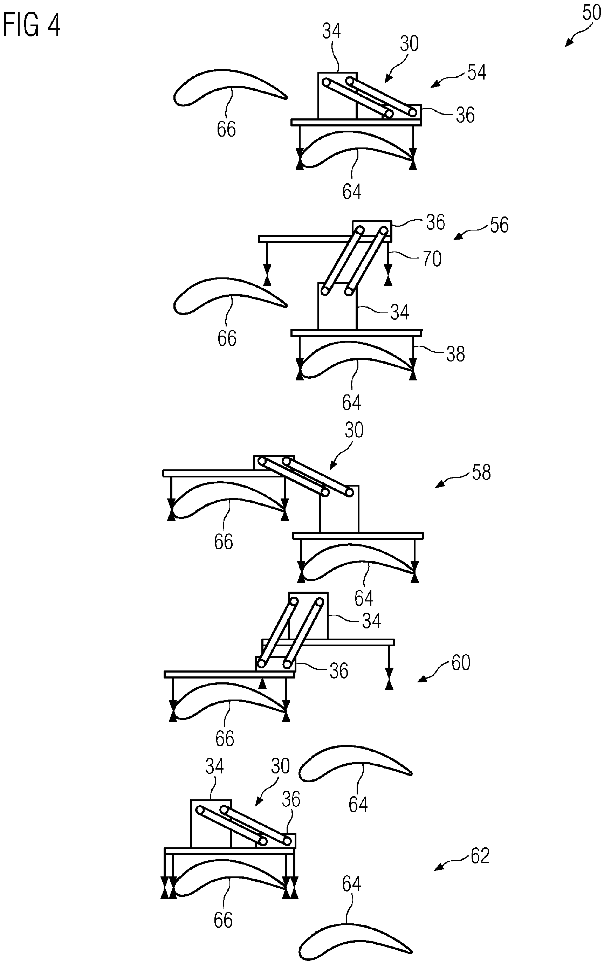

FIG 4 is a schematic diagram showing an exemplary step mechanism of the system for testing vanes, and
FIG 5 is a schematic diagram depicting another embodiment of the system for testing vane, in accordance with aspects of the present technique.

Embodiments of the present invention relate to testing of an airfoil of a turbomachine, which may include a vane component. However, the details of the embodiments described in the following can be transferred to a blade component without modifications, that is the terms "vane" or "blade" can be used in conjunction, since they both have the shape of an airfoil. The turbomachine may include a gas turbine, a steam turbine, a turbofan and the like.

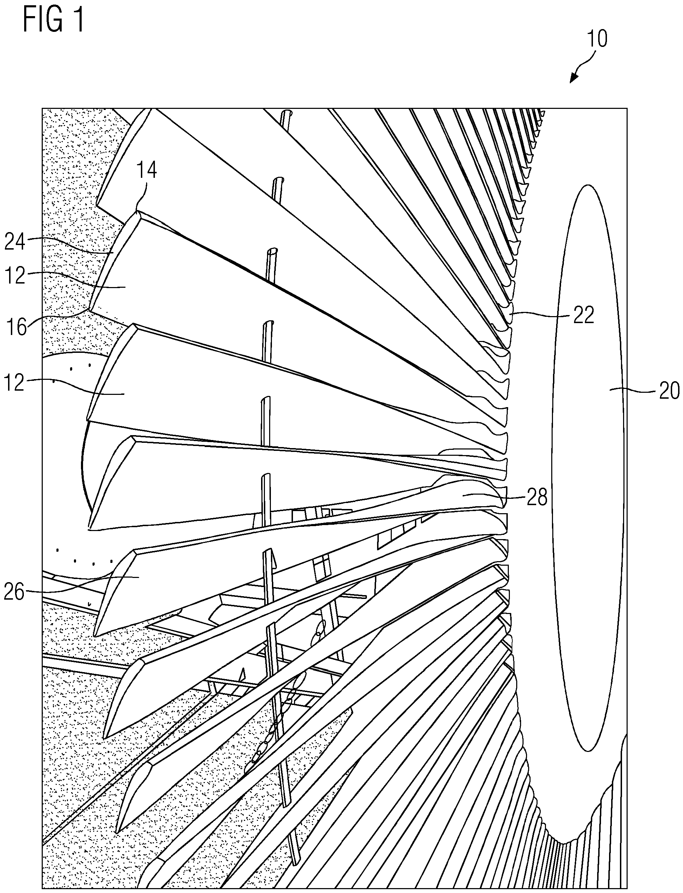

FIG 1 is a schematic diagram depicting a bladed turbine disk or blisk 10 of a turbomachine. The blisk 10 includes a plurality of airfoils such as blades or vanes 12 attached to a turbine disk 20. The blade or vanes extend in a radial direction with respect to an axis of rotation of a rotor (not shown) of the turbomachine. The rotor includes the blisk 10 and is rotated alongwith. The vanes 12 have a base 22 proximal to the turbine disk 20 and a tip 24 distal to the turbine disk 20 as depicted in FIG 1. The vane 12 may have a platform (not shown) at the tip 24.

It may be noted that a vane such as the vane 12 includes a root portion and an airfoil portion. The root portion is embedded or attached to the disk or shaft of the turbomachine and the airfoil portion extending in a direction radial to the axis of rotation of the rotor of the turbomachine.

The blade or vane 12 includes a leading edge 14 and a trailing edge 16 extending in a direction perpendicular to the radial direction of the blade or vane 12.

The airfoil portion of the blade or vane 12 has an outer wall including a pressure side 26, also called pressure surface, and a suction side 28, also called suction surface. The pressure side and the suction side are joined together along an upstream leading edge 14 and a downstream trailing edge 16, wherein the leading edge 14 and the trailing edge 16 are spaced axially from each other as depicted in FIG 1.

The vanes direct hot gas into other components of the turbomachine and are subjected to high temperatures which may be in the range of about 800 degree Celsius. Such high temperatures may cause damage to the vane which requires proper testing.

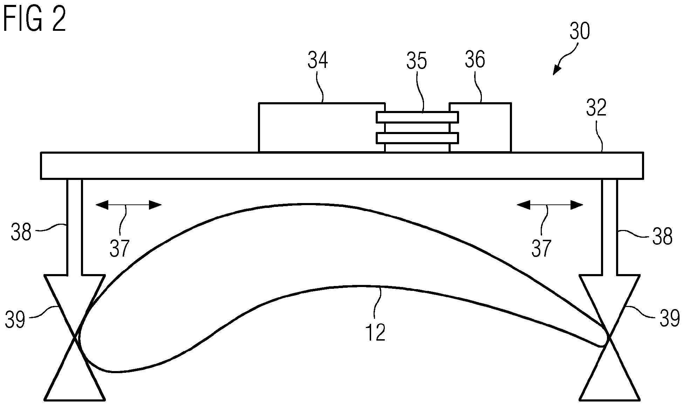

Referring now to FIG 2, a system 30 for testing the vane 12 of the turbomachine is depicted. As depicted, a cross sectional view of the vane 12 is shown. The system 30 includes a plurality of arms 38 for holding onto the vane 12. A traversing means 39 configured to move in the radial direction of the vane is coupled to the arms 38 of the system 30.

Additionally the system 30 includes a measurement probe 34 configured to calculate the dimensions of the vane 12 based on the extent of the arms which provide the dimensions along a transverse axis which is perpendicular to the radial direction of the vane and also on a distance traversed by the traversing means in the radial direction.

In accordance with aspects of the present technique, the plurality of arms 38 are coupled to a base support 32 wherein the arms are slidable in a direction as indicated by reference numeral 37. The slidable arrangement of the arms 38 enables testing of vanes of different dimensions.

Furthermore, the system 30 includes a detection probe 36 coupled to the measurement probe 34 for detecting a location of a second vane in the turbine disk.

In accordance with aspects of the present technique, the traversing means 39 may be in the form of rollers capable of rolling over the surface of the vane 12 and traversing the entire extent of the vane 12 radially.

It may further be noted that the system 30 is configured to test both the suction side and the pressure side of the vane 12. The traversing means 39 traverse the entire extent of the vane 12 on the pressure side and also the entire extent of the vane 12 on the suction side.

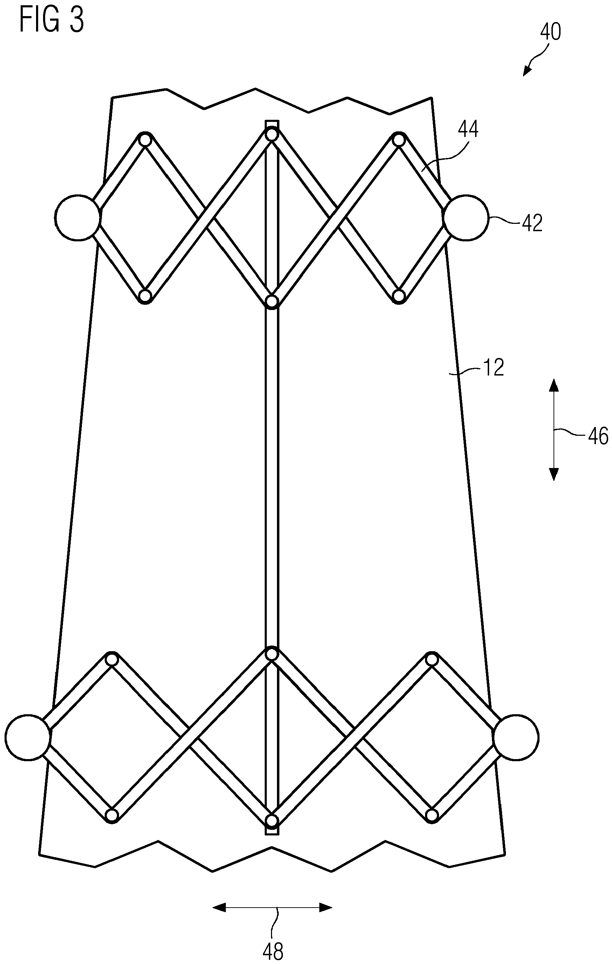

Referring now to FIG 3 a portion 40 of the vane 12 is depicted. A plurality of traversing means 39 in the form of rollers 42 are shown. These rollers 42 are movable from the tip to the base of the vane 12 along a radial direction as indicated by reference numeral 46. Additionally, the rollers 42 are connected via one or more extendable mechanical linkages 44 which allow extension along a transverse direction 48, which is perpendicular to the radial direction 46.

In the presently contemplated configuration, the rollers 42 are connected to each other through mechanical linkages 44 such as rods in a form of a pantograph which is typically an extension arm allowing extension in a particular direction such as the transverse direction 48. However, other arrangements allowing extension such as having a hydraulic or spring arrangement may also be used.

It may be noted that the measurement probe is connected to the traversing means 39 such as the rollers 42, the distance traversed by the rollers 42 and also the spacing between the rollers which generally is the distance between the leading edge 14 and the trailing edge 16 of the vane is calculated by the measurement probe 34 to determine a condition of the vane 12.

As previously noted, the traversing means 39 traverse both the sides of the vane, thus the measurement probe 34 is able to determine the condition of the vane 12 at both the pressure side 26 and the suction side 28.

FIG 3 is a schematic diagram depicting a step mechanism 50 by the system 30 for switching from a first vane 64 to a second vane 66 in a vane assembly.

At step 52, the system 30 including the measurement probe 34 and the detection probe 36 is shown as holding onto the first vane 64 through a plurality of arms 38. It may be noted that the measurement probe and the detection probe are connected to each other via connecting rods which have a degree of freedom thereby allowing movement of the measurement probe and the detection probe relative to each other. Additionally, it may be noted that the detection probe includes a second set of arms 70 operationally coupled to allow for holding onto the vane in a similar manner as the arms 38.

At step 56, the detection 36 probe detects the location of the second vane 66 relative to the first vane 64 and moves towards the second vane 66, with the second set of arms 70 releasing the first vane 64. The detection probe 36 may include sensors such as photoelectric sensors which calculate a location of the vane using an analog signal. Additionally, other sensors such as ultrasonic or infrared sensors may also be used for calculating the distance and location of the next vane.

However, it may be noted that the system 30 is still attached to the first vane 64 via the arms 38 holding onto the first vane 64.

Subsequently, as at step 58, the second set of arms 70 in the detection probe 36 get attached to the second vane 66 by holding onto the second vane 66. The second set of arms 70 may typically hold the second vane at the leading edge and the trailing edge, with the system 30 still attached to the first vane 64 via the arms 38. It may be noted that in step 58 the system 30 is held onto both the first vane 64 and the second vane 66 via the first set of arms 38 and the second set of arms 70 respectively.

At step 60, the arms 38 release the first vane 64 and move towards the second vane 66 alongwith the measurement probe 34.

In accordance with aspects of the present technique, the rods 35 connecting the measurement probe 34 and the detection probe 36 are extendable so as to reach the next vane in the vane assembly.

Finally, at step 62, the system 30 with the measurement probe 34 and the detection probe are held onto the second vane 66 with both the first set of arms 38 and the second set of arms 70 holding onto the second vane 66.

As previously noted the arms 38 are attached to traversing means 39 for traversing the vane, such as the first vane 64 and the second vane 66. The traversing means 39 move along the surface of the vane 64, 66 to calculate any irregularities in structure of the vane 64, 66.

In accordance with aspects of the present technique, the system 30 is configured to test both the pressure side 26 and the suction side 28 of the vanes 64, 66. After the pressure side 26 of the first vane is tested the second set of arms 70 hold the second vane 66 and test for irregularities on the suction side 28 of the second vane 66.

The step mechanism 50 as described hereinabove may be repeated for the next vanes in the vane assembly or blades in a turbine bladed disk and thus all the vanes or blades are tested from both the sides without dismounting the system 30.

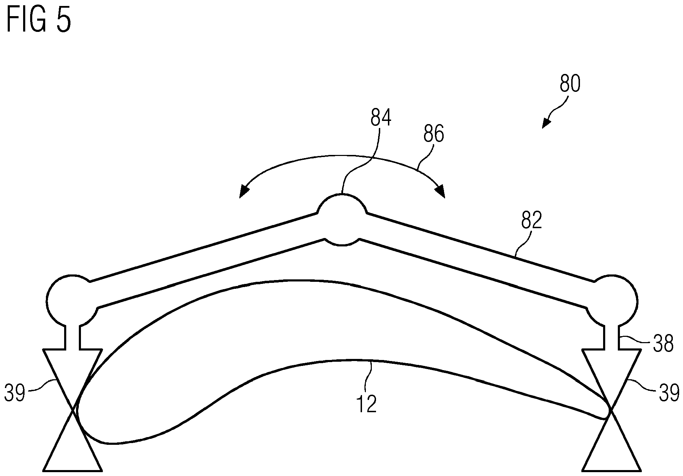

Referring now to FIG 5, an alternate embodiment 80 of the exemplary system for testing vanes of a turbomachine is presented. The system 80 includes one or more rods 82 and spacers 84 for allowing relative movement between the rods 82 as well as allowing rotation along a direction as depicted by reference numeral 86. Such an arrangement enables the system to hold onto any size of blade or vane, such as the vane 12.

The exemplary system 30, 80 as described hereinabove is also configured to determine structural damage caused or to be caused due to creep or fatigue in the vane 12 which may occur due to stress.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A system (30, 80) for testing a vane (12) of a turbomachine, comprising:
- a plurality of arms (38) for holding onto the vane (12),
- means for traversing (39) the vane (12) in a radial direction (46) with respect to an axis of rotation of a rotor of the turbomachine, and
- a measurement probe (34) for calculating the dimensions of the vane (12) based upon an extent of the arms (38) and a distance traversed by the traversing means (39).

2. The system (30, 80) according to claim 1,
wherein the arms (39) are in the form of segments comprising a plurality of rods (82) and spacers (84), wherein the arms are configured to allow a degree of freedom at an end holding onto the vane (12).

3. The system (30, 80) according to any of the claims 1 and 2,
wherein the means for traversing (39) comprise a plurality of rollers (42) operationally coupled to the arms (38).

4. The system (30, 80) according to any of the claims 1 to 3,
wherein the system is configured to test the vane (12) at a pressure side (26) and a suction side (28).

5. The system (30, 80) according to any of the claims 1 to 4,
further comprising a detection probe (36) for detecting a location of a second vane (66).

6. The system (30, 80) according to claim 5,
wherein the detection probe (36) comprises a second set of arms (70) for holding onto the second vane (66).

7. The system (30, 80) according to any of the claims 1 to 6,
wherein the system (30, 80) propagates along one or more vanes (64, 66) in a turbine disk (10) in a step mechanism (50).

8. The system (30, 80) according to claim any of the claims 1 to 7,
wherein the system (30, 80) propagates from the first vane (64) to the second vane (66) in the turbine disk (10).

9. The system (30, 80) according to any of the claims 1 to 8,
wherein the means for traversing (39) is configured to further traverse along a transverse axis (48),
wherein the transverse axis (48) is perpendicular to the radial direction (46) of the vane (12).

10. The system (30, 80) according to any of the claims 1 to 9,
wherein the system (30, 80) is operationally coupled to the turbomachine.

11. The system (30, 80) according to any of the claims 1 to 10,
wherein the detection probe (36) comprises a sensor for detecting the location of the second vane (66) with respect to the first vane (64).

12. The system (30, 80) according to any of the claims 1 to 11,
wherein the traversing means (39) further comprises extendable linkages (44) for allowing extension along the transverse axis (48).
